(19) 

Europäisches
Patentamt
European
Patent Office
Office européen
des brevets

(11) **EP 4 572 481 A1**

(12) **EUROPEAN PATENT APPLICATION**
published in accordance with Art. 153(4) EPC

(43) Date of publication:
**18.06.2025 Bulletin 2025/25**

(21) Application number: **23899457.8**

(22) Date of filing: **15.08.2023**

(51) International Patent Classification (IPC):
***H04W 72/0446*** (2023.01)

(52) Cooperative Patent Classification (CPC):
**H04B 17/309; H04L 5/00; H04W 24/08;
H04W 72/044; H04W 72/0446; H04W 72/0453;
H04W 72/21; H04W 72/23**

(86) International application number:
**PCT/CN2023/113079**

(87) International publication number:
**WO 2024/119872 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 CN 202211559629**

(71) Applicant: ZTE Corporation
**Shenzhen, Guangdong 518057 (CN)**

(72) Inventors:
• LU, Zhaohua
  **Shenzhen, Guangdong 518057 (CN)**
• LIU, Kun
  **Shenzhen, Guangdong 518057 (CN)**
• ZHENG, Guozeng
  **Shenzhen, Guangdong 518057 (CN)**
• XIAO, Huahua
  **Shenzhen, Guangdong 518057 (CN)**

(74) Representative: Ziebig Hengelhaupt Intellectual
**Property Attorneys
Patentanwaltskanzlei PartGmbB
Leipziger Straße 49
10117 Berlin (DE)**

(54) **SIGNAL SENDING METHOD AND FUNCTIONAL MODULE CONFIGURATION METHOD**

(57) Provided are a signal sending method and a functional module configuration method. The signal sending method comprises: sending a first signal according to a transmission configuration set, wherein the transmission configuration set comprises at least one transmission configuration, and the transmission configuration comprises a time-domain resource and/or a frequency-domain resource.

```
┌──────────────┐              ┌──────────────┐
│  First node  │              │ Second node  │
└──────┬───────┘              └──────┬───────┘
       │                             │
       │  S101, Send a first signal  │
       │  according to a transmission│
       │     configuration set       │
       │ ──────────────────────────> │
       │                             │
```

FIG. 2

EP 4 572 481 A1

## Description

The present disclosure claims a priority to Chinese Patent Application No. 202211559629.0, and filed on December 6, 2022, which is incorporated herein by reference in its entirety.

## TECHNICAL FIELD

The present disclosure relates to the field of communication technology, and in particular to a signal transmitting method and a configuring method for a functional module.

## BACKGROUND

With the evolution of communication systems and the emergence of more and more application requirements, people's requirements on communication latency, reliability, bandwidth, and access volume are becoming more and more stringent.

## SUMMARY

In an aspect, some embodiments of the present disclosure provide a signal transmitting method. The signal transmitting method is applied to a first node, and includes:

transmitting a first signal according to a transmission configuration set;
where the transmission configuration set includes one or more transmission configurations, and the transmission configuration includes a time domain resource and/or a frequency domain resource.

In another aspect, the some embodiments of the present disclosure provide a single transmitting method. The single transmitting method is applied to a second node, and includes:

transmitting configuration information of a first functional module to a first node;
where the first functional module is configured to determine a transmission configuration set of the first node, the transmission configuration set includes one or more transmission configurations, and the transmission configuration includes a time domain resource and/or a frequency domain resource.

In yet another aspect, the some embodiments of the present disclosure provide a configuring method for a functional module. The configuration method includes:

acquiring a type of a functional module;
determining identification information of the functional module according to the type of the functional module.

In yet another aspect, the some embodiments of the present disclosure provide a configuring method for a functional module. The configuration method is applied to the first node, and includes:

receiving indication information used to indicate activation or deactivation of a first functional module and from a second node;
activating or deactivating the first functional module and a second functional module based on the indication information, where there is an association relationship between the first functional module and the second functional module.

In yet another aspect, the some embodiments of the present disclosure provide a configuring method for a functional module, and the configuration method is applied to a second node and includes:
transmitting indication information used to indicate activation or deactivation of a first functional module to a first node, so that the first node activates or deactivates the first functional module and a second functional module, where there is an association relationship between the first functional module and the second functional module.

In yet another aspect, the some embodiments of the present disclosure provide a communication apparatus. The communication apparatus includes: a memory and a processor; the memory and the processor are coupled; the memory is configured to store instructions executable by the processor; when the processor executes the instructions, the method in any one of the above embodiments is implemented.

In yet another aspect, the some embodiments of the present disclosure provide a computer readable storage medium. The computer readable storage medium has stored computer program instructions thereon, where when the computer program instructions are executed by a computer, the method in any one of the above embodiments is implemented.

In yet another aspect, the some embodiments of the present disclosure provide a computer program product. The computer program product includes computer program instructions, where when the computer program instructions are executed by a computer, the method in any one of the above embodiments is implemented.

## BRIEF DESCRIPTION OF THE DRAWINGS

In order to describe technical solutions in the present disclosure more clearly, the accompanying drawings to be used in the description of some embodiments of the present disclosure will be introduced briefly. Obviously, the accompanying drawings in the following description are merely some embodiments of the present disclosure, and other drawings can be obtained according to these drawings for a person of ordinary skill in the art.

FIG. 1 is a structural schematic diagram of a communication system in accordance with some embodiments.

FIG. 2 is a flow chart of a signal transmitting method in accordance with in accordance with some embodiments.

FIG. 3 is a flow chart of another signal transmitting method in accordance with some embodiments.

FIG. 4 is a flow chart of another signal transmitting method in accordance with some embodiments.

FIG. 5 is a flow chart of a configuring method for a functional module in accordance with some embodiments.

FIG. 6 is a flow chart of another configuring method for a functional module by some embodiments.

FIG. 7 is a structural diagram of a first node in accordance with some embodiments.

FIG. 8 is a structural diagram of a second node in accordance with some embodiments.

FIG. 9 is a block diagram of a configuring apparatus for a functional module in accordance with some embodiments.

FIG. 10 is a structural diagram of another first node in accordance with some embodiments.

FIG. 11 is a structural diagram of another second node in accordance with some embodiments.

FIG. 12 is a structural diagram of a communication apparatus in accordance with some embodiments.

DETAILED DESCRIPTION

In addition, in the present disclosure, wording such as "exemplarily" or "for example" is used to present an example, illustration, or explanation. Any embodiment or design solution described herein with "exemplary" or "for example" in the present disclosure is not necessarily to be construed as preferred or advantageous over other embodiments or design solutions. Rather, the usage of wording such as "exemplary" or "for example" is intended to present relevant concepts in a detailed manner.

Hereinafter, terms such as "first" and "second" are used for descriptive purposes only and are not to be construed as indicating or implying relative importance or implicitly indicating the number of indicated technical features. Thus, features defined with "first" or "second" may explicitly or implicitly include one or more of the features.

In the description of the present disclosure, unless otherwise specified, the symbol "/" means "or", for example, "A/B" may mean A or B. Herein, "and/or" merely describes an association relationship of associated objects, and means that there are three kinds of relationships; for example, A and/or B may mean three cases where: A exists alone, B exists alone, and A and B both exist. In addition, "at least one" means one or more, and "plurality" and variations thereof means two or more.

The described embodiments are merely some but not all of the embodiments of the present disclosure. All other embodiments obtained based on the embodiments of the present disclosure by a person of ordinary skill in the art without paying any creative effort shall be included in the protection scope of the present disclosure.

In order to enable those skilled in the art to better understand the technical solutions of the embodiments of the present disclosure, the technical solutions in the present disclosure will be described clearly and completely below with reference to the accompanying drawings.

The technical solution provided by the embodiments of the present disclosure may be applied to systems with various communication standards, for example, a Long Term Evolution (Long Term Evolution, LTE) system, various versions based on LTE evolution, 5th Generation Mobile Communication System (5th Generation Mobile Communication System, 5G) system, and a New Radio (New Radio, NR) system and other next generation communication systems.

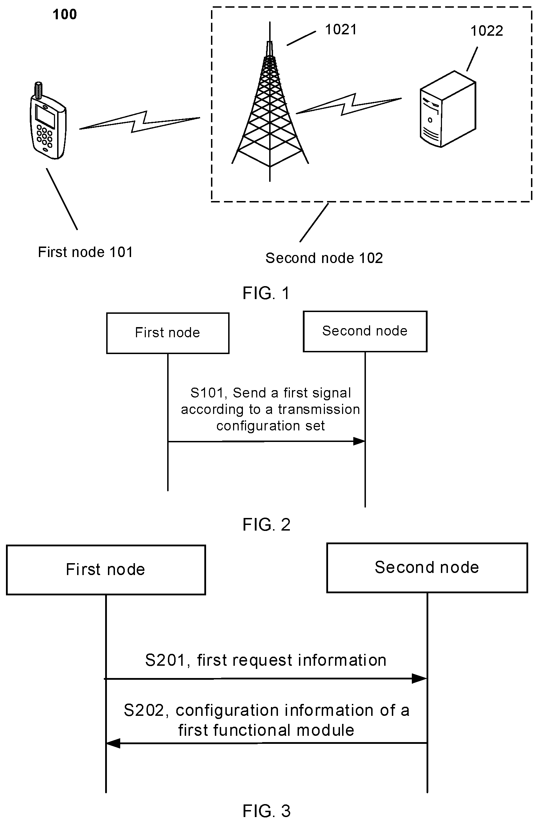

To further explain the solution, FIG. 1 is used to show a structural schematic diagram of a communication system. The technical solution in the embodiments of the present disclosure may be applied to a communication system shown in FIG. 1.

As shown in FIG. 1, a communication system 100 includes a first node 101 and a second node 102. The first node 101 is a terminal device; the second node 102 includes: a base station 1021 and/or a server 1022.

In some embodiments, the first node 101 is a terminal device. The terminal device may also be referred to as a terminal, a user equipment (User Equipment, UE), a mobile station, a mobile terminal, etc. The terminal device may be a mobile phone, a tablet computer, a computer with a wireless transceiver function, a virtual reality terminal device, an augmented reality terminal device, a wireless terminal in industrial control, a wireless terminal in unmanned driving, a wireless terminal in remote surgery, a wireless terminal in transportation safety, a wireless terminal in smart city, a wireless terminal in smart home, etc. The embodiments of the present disclosure do not limit the technology and device form adopted by the terminal device.

In some embodiments, the base station 1021 may be any one of an evolution nodeB (evolution nodeB, eNB), a next generation nodeB (generation nodeB, gNB), a transmission receive point (Transmission Receive point, TRP), a transmission point (Transmission Point, TP), and some other access nodes. According to a size of a provided service coverage area, the base station may be classified into an macro base station for providing a macro cell (a Macro cell), a pico base station for providing a pico cell (a Pico cell) and a femto base station for providing a femto cell (a Femto cell). With the continuous evolution of wireless communication technology, the future base stations may also adopt other names.

In some embodiments, the server 1022 may be a single server, a server cluster composed of multiple servers. In some embodiments, the server cluster may also be a distributed cluster. In some embodiments, the server 1022 may also be a cloud server that provides basic cloud computing services such as a cloud service, a cloud database, cloud computing, cloud storage, a network service, cloud communication, a middleware service, a domain name service, a security service, a content distribution network, and a big data server. The present disclosure does not limit the form of the server.

In some embodiments, the base station 1021 and the server 1022 may be deployed independently or integrated. In the subsequent introduction, the base station 1021, the server 1022, or a device after the integrated deployment of the base station 1021 and the server 1022 are collectively referred to as the second node 102, which will not be repeated below.

It can be understood that the physical model, system architecture or scenario of the communication system described in the embodiments of the present disclosure is for more clearly explaining the technical solutions of the embodiments of the present disclosure, and does not constitute a limitation on the technical solutions provided by the embodiments of the present disclosure. A person of ordinary skill in the art may know that with the evolution of network architecture and the emergence of new service scenarios, the technical solution in the embodiments of the present disclosure is also applicable to similar technical problems.

As mentioned in the background, with the evolution of the communication system and the emergence of more and more application requirements, people have increasingly stringent requirements on communication latency, reliability, bandwidth, and access volume. The large-scale commercialization of 5G and NR technologies is accelerating the transformation of the economy and society towards digitalization, networking and intelligence, and is pushing the network into a new era of the Internet of Things. The rapid emergence of application demands in smart city, smart transportation, smart industrial production, etc., has led to a continuous strengthening of the development trend of differentiated network equipment capabilities, diversified network functions, and intelligent network management and control, further promoting the arrival of the 6th Generation Mobile Communication System (6G) of the intelligent interconnection of everything. In typical 6G application scenarios represented by smart cities, smart transportation, and smart homes, there are a large number of intelligent automation devices with highly differentiated capabilities, and the communication requirements in terms of extremely low latency, extremely high reliability, ultra-large bandwidth, and massive access are becoming increasingly stringent, and the applications of intelligent automation types also require high precision and high resolution. On the one hand, the surge in the number of wireless communications and sensing devices has made the contradiction between the endless growth of business demand and the limited wireless resources and computing power more and more prominent; on the other hand, the realization of the 6G vision requires the closed-loop information flow processing of acquisition of environmental perception information, information interaction and sharing, intelligent information processing, and control information (including control information of the communication network and control instructions of application execution devices) distributed layer by layer. In some technologies, wireless network architecture and related technologies have been unable to meet the emerging application demands in the 5G and Beyond (5G and Beyond, B5G)/6G era, and it is urgent to develop new network architectures and enabling technologies that can efficiently utilize resources and intelligently adapt to differentiated applications.

In the current communication system, when a terminal transmits a signal, a beam direction is selected to transmit the signal based on the information of all received beams mainly. For example, in the 5G NR system, the terminal receives the synchronization signal/physical broadcast channel block (SSB) from the base station. Since SSB may be transmitted in a multiple-beam manner (that is, SSB information may be transmitted through different beam directions), the terminal selects a beam direction corresponding to the SSB according to the received SSB, further selects a random access channel (Physical Random Access Channel, PRACH) resource corresponding to the beam direction, and transmits a random access signal (Random Access Preamble) on the above PRACH resource to initiate the random access procedure and then transmit a signal.

However, this method cannot select an optimal transmission configuration set upon transmitting a signal, so it is difficult to meet emerging application needs and the communication quality is low.

In this regard, the embodiments of the present disclosure provide a signal transmitting method, the method includes: transmitting a first signal according to a transmission configuration set; the transmission configuration set includes at least one transmission configuration, and the transmission configuration includes a time domain resource and/or a frequency domain resource. Based on this, the first signal may be transmitted according to the optimal transmission configuration set, thereby improving the communication quality.

FIG. 2 is a flow chart of a signal transmitting method in accordance with some embodiments. As shown in FIG. 2, the signal transmitting method includes S101.

In S101, a first node transmits a first signal according to a transmission configuration set; correspondingly, a second node receives the first signal transmitted from the first node according to the transmission configuration set.

The transmission configuration set includes at least one transmission configuration. The transmission configuration includes at least the following configuration information: a time domain resource and/or a frequency domain resource. It can be understood that the transmission configuration may also be named as a transmitting configuration or a resource configuration, etc., which is not limited in the present disclosure herein.

In some embodiments, a transmission configuration corresponds to a transmission mode and the configuration information in the transmission configuration is configuration information required to support the transmission mode.

In some embodiments, the transmission configuration further includes one or more of the following configuration information: a reference signal resource, a discrete fourier transformation (Discrete Fourier Transformation, DFT) vector, a signal multiplexing manner, a transmitter spatial filter, a transmitter encoding, a codeword encoded by a transmitter, a transmitter antenna port, a transmitter antenna weight vector, a transmitter antenna weight matrix, a receiver spatial filter, a receiver encoding, a codeword encoded by a receiver, a receiver antenna port, a receiver antenna weight vector, a receiver antenna weight matrix, an angle Of departure (Angle Of Departure, AOD), a zenith angle of departure (Zenith Angle Of Departure, ZOD), an angle of arrival (Angle Of Arrival, AOA), a zenith angle of arrival (Zenith angle Of Arrival, ZOA), a vector or vector index constructed by at least one angle of AOA, AOD, ZOD, or ZOA, and a codeword in the codebook. The reference signal resource includes one or more of a time domain resource, a frequency domain resource, a code domain resource, and port information of the reference signal. The reference signal includes a sounding reference signal (Sounding Reference Signal, SRS). The signal multiplexing manner includes one or more of: spatial division multiplexing, time division multiplexing, and frequency division multiplexing.

In some embodiments, the transmission configuration further includes one or more of the following configuration information: a transmitting beam, a transmitting beam group, transmitting beam index information, a transmitting beam group index, a transmitting beam pair, transmitting beam numbering information, transmitting beam direction information, a receiving beam, a receiving beam group, receiving beam index information, a receiving beam group index, a receiving beam pair, receiving beam index information, receiving beam numbering information, or receiving beam direction information.

In some embodiments, the transmission configuration further includes one or more of the following configuration information: a spatial filter, a spatial reception parameter, or a spatial transmission parameter. The spatial filter may be one or more of: a DFT vector, a precoding vector, a DFT matrix, a precoding matrix, a vector constructed by a linear combination of multiple DFTs, or a vector constructed by a linear combination of multiple precoding vectors.

It can be understood that the contents included in the above transmission configuration are merely examples. As actual needs change and network architecture evolves, the transmission configuration may also include other possible contents, which are not limited in the embodiments of the present disclosure.

In some embodiments, the transmission configuration set is determined by one or more of: a first functional module; configuration information of a downlink reference signal/a downlink channel; configuration information of an uplink reference signal/an uplink channel; configuration information of a downlink signal/a downlink channel; configuration information of an uplink signal/an uplink channel; measurement information or detection information of a downlink reference signal/a downlink channel; measurement information or detection information of an uplink reference signal/an uplink channel; measurement information or detection information of an uplink signal/an uplink channel; measurement information or detection information of a downlink signal/a downlink channel.

The first functional module may also be named a learning module, an artificial intelligence (Artificial Intelligence, AI) module, a configuration estimation module, or a resource allocation module, etc., which is not limited in the embodiments of the present disclosure. As an example, output information of the first functional module may include one or more transmission configurations, and a transmission configuration set is constructed according to the one or more transmission configurations.

Exemplarily, the transmission configuration set may be determined by the following manners: inputting one or more of the configuration information of the downlink reference signal/the downlink channel, the configuration information of the uplink reference signal/the uplink channel, the configuration information of the uplink signal/uplink channel, the configuration information of the downlink signal/downlink channel, the measurement information or detection information of the downlink reference signal/a downlink channel, the measurement information or detection information of the uplink reference signal/the uplink channel, the measurement information or detection information of the uplink signal/uplink channel, and the measurement information or detection information of the downlink signal/downlink channel into the first functional module, obtaining one or more transmission configurations output by the first functional module, and constructing a transmission configuration set with at least one transmission configuration of the one or more transmission configurations.

As an example, a first transmission configuration, a second transmission configuration, and a third transmission configuration are output by the first functional module. The configuration information of the first transmission configuration, the second transmission configuration, and the third transmission configuration all include: a time domain resource and/or a frequency domain resource, a reference signal resource, and a first signal multiplexing manner. One or more of the first transmission configuration, the second transmission configuration and the third transmission configuration is taken to constitute a transmission configuration set. For example, the first transmission configuration and the second transmission configuration may constitute a transmission configuration set. For another example, the first transmission configuration, the second transmission configuration, and the third transmission configuration may constitute a transmission configuration set. Based on this, the determination of the transmission configuration set may be implemented.

In some other embodiments, the first node determines the transmission configuration set based on other preset manners. The other preset manners include one or more of: receiving a transmission configuration set transmitted from the second node, pre-configuring a transmission configuration set, pre-storing a transmission configuration set, a default configuration or a default storage. Based on this, the determination of the transmission configuration set may also be implemented. For example, in a case where the indication information used to indicate whether the first functional module is enabled indicates that the first functional module is not enabled, the transmission configuration set is determined based on other preset manners.

In some embodiments, the first signal includes, but is not limited to, one or more of: an uplink synchronization signal, an uplink access signal, an uplink random access signal, an uplink channel quality measurement signal, and an uplink reference signal.

In some embodiments, the first signal includes, but is not limited to, one or more of: a data signal, a service signal, a control signal, a reference signal, and a broadcast signal.

In some embodiments, S101 is implemented to: transmit a first signal according to one or more transmission configurations in a transmission configuration set.

Exemplarily, in a case where the transmission configuration set includes a first transmission configuration and a second transmission configuration, S101 may be implemented to: transmit a first signal according to the first transmission configuration, and/or transmit a first signal according to the second transmission configuration.

In some embodiments, S101 is implemented to:

select a third transmission configuration applicable to the first signal from the transmission configuration set based on the transmission configuration indication information, and transmit the first signal according to the third transmission configuration. The transmission configuration indication information is used to indicate the transmission configuration used by the first signal. In some examples, the transmission configuration indication information may be configured by the first node; or, the transmission configuration indication information is acquired by the first node from the second node and configured by the second node.

In some embodiments, S101 is implemented for: receiving, by the first node, a second signal from the second node; detecting and/or demodulating, by the first node, the second signal to determine a transmission configuration of the first signal. In some examples, the second signal may include one or more of: a downlink reference signal/a downlink channel, an uplink reference signal/an uplink channel, a downlink signal/a downlink channel, and an uplink signal/an uplink channel.

In some examples, the detecting and/or demodulating, by the first node, the second signal to determine the transmission configuration of the first signal, is implemented in detail as follows: detecting and/or demodulating, by the first node, the second signal to obtain configuration information of the second signal and/or measurement information or detection information of the second signal; inputting the configuration information of the above second signal and/or the measurement information or detection information of the second signal into the first functional module to obtain the transmission configuration of the first signal.

In some examples, the first signal and the second signal are quasi co-location (Quasi co-location, QCL), and the first node receives indication information from the second node and indicating that the first signal and the second signal are quasi co-location. As an example, the first signal and the second signal are determined to be quasi-co-located when the error of one or more of the following parameters of the first signal and the second signal is within a preset range: Doppler spread, Doppler shift, delay spread, average delay, average gain and a spatial parameter (Spatial Rx Parameter, or Spatial Parameter). The spatial parameter may include a spatial receiving parameter, such as an angle of departure, spatial correlation of a receiving beam, an average delay, correlation of a time-frequency channel response, where the correlation of time-frequency channel response includes phase information of the time-frequency channel response.

In this way, a signal may be transmitted according to an optimal transmission configuration set, thereby improving communication quality.

In order to further understand the solution, the relevant configuration of the first functional module is introduced below.

In some embodiments, the first functional module is determined by the first node based on the configuration information of the first functional module transmitted from the second node. Alternatively, the first functional module is pre-stored in the first node. Alternatively, the first functional module is obtained after the first node is updated based on the second functional module. It can be understood that the present embodiment does not limit the method for determining the first functional module.

Taking a case where a first functional node is obtained based on the updating of the second functional module, if a first functional module with an old version is denoted as a second functional module, after configuration information or update information of the first functional module with a new version transmitted from the second node (such as a base station or a server) is received, the second functional module is updated as the first functional module with the new version. It can be understood that the update information includes part or all of the configuration information of the first functional module with the new version.

In some embodiments, the configuration information of the first functional module includes one or more of the following information: a function of the first functional module, input information of the first functional module, output information of the first functional module, indication information used to indicate whether the first functional module is enabled, identification information of the first functional module, index information of the first functional module, storage location information of the first functional module, version information of the first functional module, hardware configuration information of the first functional module, and software configuration information of the first functional module.

The function of the first functional module is used for determining a transmission configuration set.

In some examples, the input information of the first functional module includes but is not limited to one or more of the following information: configuration information of a downlink reference signal/a downlink channel; configuration information of an uplink reference signal/an uplink channel; configuration information of a downlink signal/a downlink channel; configuration information of an uplink signal/an uplink channel; measurement information or detection information of a downlink reference signal/a downlink channel; measurement information or detection information of an uplink reference signal/an uplink channel; measurement information or detection information of an uplink signal/an uplink channel; measurement information or detection information of a downlink signal/a downlink channel.

In some examples, the output information of the first functional module includes: one or more transmission configurations. The content of the transmission configuration may refer to the description above, which will not be repeated herein.

In some examples, if the indication information used to indicate whether the first functional module is enabled indicates that the first functional module is enabled, the first functional module is activated and a transmission configuration set is determined based on the first functional module; the detailed implementation of determining the transmission configuration set based on the first functional module may refer to the embodiments described above and possible implementations thereof.

In some examples, the identification information of the first functional module is used to identify an identity (identity, ID) of the first functional module.

In some examples, the index information of the first functional module is used to indicate a location index of the first functional module.

In some examples, the hardware configuration information of the first functional module includes configuration information corresponding to hardware devices required by the first functional module, such as a processor, an operator, a controller, a memory, an input device, and an output device. The present disclosure does not limit the hardware devices required by the first functional module.

In some examples, the software configuration information of the first functional module includes configuration information corresponding to a software (e.g., a software used to assist in generating the first functional module, etc.) required by the first functional module. It can be understood that the software and the configuration information corresponding to the software required for the first functional module may assist the above hardware device in working normally, which is not limited in the present disclosure.

In some embodiments, the configuration information of the first functional module is determined according to a type of the first node. It can be understood that, due to differences in performance and encoding manners of the first nodes, configuration information of different types of first functional modules may be set based on different types of first nodes.

In some embodiments, the configuration information of the first functional module is determined according to a type of the first functional module. In some examples, the first functional module includes at least two types.

Exemplarily, the type of the first functional module includes a first type or a second type. The first type of first functional module is a first functional module configured by the second node to the first node; the functional module with the second type is a first functional module generated or updated by the first node. As an example, the configuration information of different types of first functional modules is set based on different types of first functional modules.

It can be understood that the generation manners of the above first type of first functional module and the second type of first functional module are different, so the configuration information corresponding to the first functional modules may differ in encoding manners, etc. Therefore, the configuration information of different types of first functional modules may be set according to the types of the first functional modules.

In some embodiments, as shown in FIG. 3, the above method further includes S201 to S202.

In S201 (as an example), a first node transmits first request information to a second node; correspondingly, the second node receives the first request information from the first node.

The first request information is used to request configuration information of the first functional module.

In some embodiments, the first request information may be used to carry one or more of a terminal identifier of the first node, a type of the first node, and a type of the first functional module; so that the second node may configure configuration information applicable for the first functional module of the first node.

In some embodiments, S201 is implemented in detail as follows: in a case where the first condition is satisfied, transmitting the first request information to the second node. The first condition includes one or more of: the first node receiving an instruction for configuring a transmission configuration set; the first node not including the first functional module; a service type of the first node being changed; wireless environment information of the first node being changed; or, a channel quality of the first node being changed; version information of the first functional module included in the first node being lower than version information of the first functional module in the second node.

In S202, a second node transmits configuration information of a first functional module to a first node; correspondingly, the first node receives the configuration information of the first functional module from the second node.

In some embodiments, the transmitting, by the second node, the configuration information of the first functional module to the first node is implemented in detail as follows: after receiving the first request information, configuring or selecting, by the second node, the configuration information of the first functional module based on one or more of a terminal identifier of the first node, a type of the first node, and a type of the first functional module, and transmitting, by the second node, the configuration information of the first functional module to the first node.

It can be understood that S201 is an exemplary step. The second node may actively transmit the configuration information of the first functional module to the first node without receiving the first request information.

In some embodiments, the transmitting, by the second node, the configuration information of the first functional module to the first node is implemented in detail as follows: in a case where the second condition is satisfied, transmitting, by the second node, the configuration information of the first functional module to the first node. The second condition includes one or more of: the first request information from the first node being received, where the first request is used to request the configuration information of the first functional module; the service type change of the first node being detected; or the wireless environment information change of the first node being detected; or the wireless channel quality measurement information change of the first node being detected.

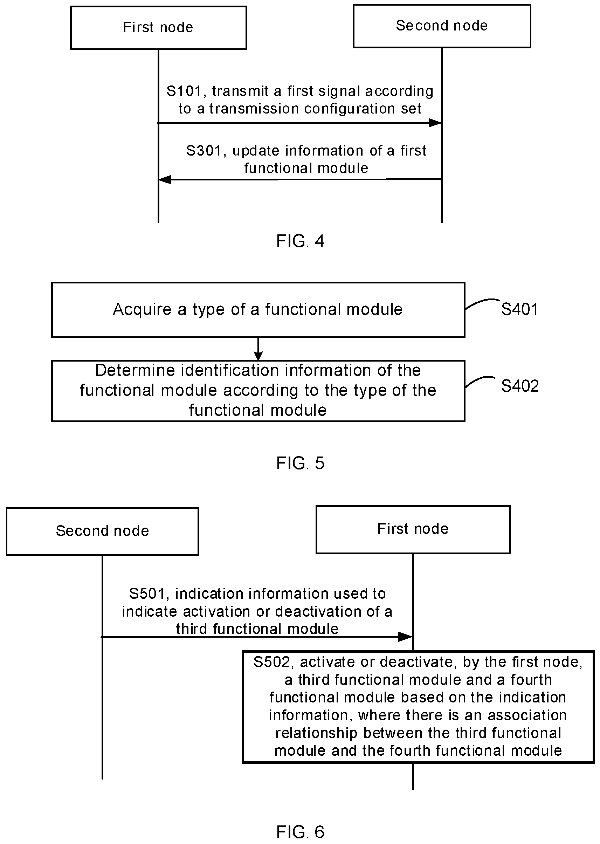

In some embodiments, as shown in FIG. 4, after S101, the method further includes S301.

In S301, the second node transmits update information of a first functional module to a first node; correspondingly, the first node receives the update information of the first functional module from the second node.

The update information of the first functional module is used to update the first functional module.

In some embodiments, the update information of the first functional module is determined based on the first signal. Exemplarily, the update information of the first functional module is configured by the second node based on the reception performance of the first signal. Based on this, a feedback from a receiver (e.g., the second node) may be implemented to optimize the first functional module on the first node side, so that the transmission configuration set output by the updated first functional module may provide better signal performance upon transmitting a signal.

In some embodiments, the embodiments of the present disclosure further provide a configuring method for a functional module, which is applicable to the above first functional module but is not limited to the first functional module. As shown in FIG. 5, the configuring method for a functional module includes S401 to S402.

In S401, a type of a functional module is acquired.

In some embodiments, the type of the functional module includes at least two types. Exemplarily, the type of the functional module includes a first type and a second type. As an example, the functional module with the first type is a functional module configured by the second node (such as a base station or a server) to the first node. The functional module with the second type is a functional module generated or updated by the first node (e.g., a terminal device).

In some embodiments, S401 is implemented in detail as follows: acquiring information used to indicate a type of the functional module; and determining the type of functional module according to the information used to indicate the type of functional module.

As an example, the above information used to indicate the type of the functional module is generated by the first node. As another example, the above information used to indicate the type of the functional module is generated by the second node.

In S402, identification information of the functional module is determined according to the type of the functional module.

In some embodiments, in a case where the type of the functional module is the first type, the identification information of the functional module uniquely identifies the functional module in one or more second nodes.

**In** some embodiments, in a case where the type of the functional module is the second type, the identification information of the functional module uniquely identifies the functional module in one or more second nodes.

As an example, the identification information of the functional module uniquely identifies the functional module in all base stations and/or all servers. As an example, the identification information of the functional module may also uniquely identify the functional module only in a base station and/or a server. As another example, identification information of a same functional module may identify different functional modules in different base stations or in different servers. It can be understood that as long as the identification information of the functional module is ensured to uniquely identify the functional module in one or more second nodes, such as a base station, a server, or an integrated device of a base station and a server, which is not limited in the embodiments of the present disclosure.

Similarly, in a case where the type of the functional module is the first type, the identification information of the functional module uniquely identifies the functional module in one or more first nodes.

Similarly, in a case where the type of the functional module is the second type, the identification information of the functional module uniquely identifies the functional module in one or more first nodes.

It can be understood that the identification information of the functional module may uniquely identify the functional module in a first node (such as a terminal); the identification information of the same functional module may identify the same or different functional modules in different first nodes, which are not limited in the embodiments of the present disclosure.

In some embodiments, a length of the identification information of the functional module with the first type is different from that of the identification information of the functional module with the second type.

As an example, the length of the identification information of the functional module with the first type is greater than that of the identification information of the functional module with the second type. It can be understood that the functional module with the first type is a functional module configured by a second node (such as a base station or a server, etc.) to a first node, and a second node is usually connected to one or more first nodes. Therefore, it may be necessary to transmit the configuration information of the functional module to a plurality of first nodes, and thus longer identification information is required to indicate to which first node the configuration information of the corresponding functional module is transmitted. The functional module with the second type is a functional module generated or updated by the first node (e.g., a terminal device), so it is only necessary to distinguish the functional modules within a first node, and thus shorter identification information may be used to identify the identification information of the functional module with the first type.

In some embodiments, the identification information of the functional module with the first type is taken from a first identification information set.

In some embodiments, the first identification information set is a preset identification information set.

In some embodiments, the lengths of the respective pieces of identification information in the first identification information set are consistent, so that the first node may read the identification information of the functional module.

In some embodiments, the identification information of the functional module with the first type is configured by the second node or based on a default rule.

In some embodiments, the identification information of the functional module with the second type is taken from a first identification information set. The first identification information set may refer to the description above, which is not limited herein.

In some embodiments, in a case where the number of identification information in the first identification information set is greater than the number of the functional modules with the first type, the identification information of the functional module with the second type is taken from the first identification information set.

In some other embodiments, in case where the number of identification information in the first identification information set is greater than the total number of the functional module(s) with the first type and the functional module(s) with the second type, the identification information of the functional module with the second type is taken from the first identification information set.

In some embodiments, the length of the identification information of the functional module with the second type is related to the number of the functional modules with the second type.

Exemplarily, in case where the number of the functional modules with the second type supported by the first node is **N,** and **N** is a positive integer, the length **K** of the identification information satisfies the following relationship.

$$K=\mathrm{ceil}(\log_2(N)).$$

In the above formula, **K** is the length of the identification information, **N** is the number of the functional modules with the second type supported by the first node, and ceil() is a round-up function.

In some embodiments, the second node prestores or updates relevant information of the functional module with the second type supported by respective first nodes. Further, the functional module reported by the first node is determined based on the received identification information of the functional module with the second type transmitted from the first node.

It can be understood that the functional module with the second type is a functional module generated or updated on the first node (e.g., a terminal) side, and therefore, the second node may not be aware of the identification information of the functional module with the second type. When the second node receives the same identification information of the functional modules transmitted from a plurality of first nodes, misjudgment may occur. However, in a case where the second node pre-stores or updates the relevant information of the functional module with the second type supported by respective first nodes, the detailed content of the functional modules reported by respective first nodes may be searched from the stored relevant information according to the received identification information of the functional module with the second type, thereby avoiding the misjudgment caused by a plurality of first nodes reporting the same identification information.

In some embodiments, in order to realize the associated activation or deactivation of functional modules, the embodiments of the present disclosure further provide a configuring method for a functional module. As shown in FIG. 6, the configuring method for a functional module includes S501 to S502.

In S501, the second node transmits indication information used to indicate activation or deactivation of a third functional module to a first node; correspondingly, the first node receives the indication information used to indicate activation or deactivation of the third functional module from the second node.

In S502, the first node activates or deactivates a third functional module and a fourth functional module based on the indication information, where there is an association relationship between the third functional module and the fourth functional module.

In some embodiments, the fourth functional module is one or more functional modules associated with the third functional module. The embodiments of the present disclosure do not limit the number of modules of the fourth functional module. The association relationship is configured by the second node; or, the association relationship is configured by the first node; or, the association relationship is configured based on a default rule.

In some embodiments, a plurality of functional modules with associated relationships may constitute a functional module group. Alternatively, there is an associated relationship among different functional modules belonging to a same functional module group. Exemplarily, the third functional module and the fourth functional module belong to the same functional module group. The functional module group is configured by the second node. Alternatively, the functional module group is configured by the first node. Alternatively, the functional module group is configured based on a default rule.

In some embodiments, there is an association relationship between the third functional module and the fourth functional module, which may be considered that the third functional module needs to operate in collaboration with the fourth functional module, for example, the third functional module and the fourth functional module are used to process a same task.

Exemplarily, in a case where the first node receives indication information used to indicate deactivation of the third functional module, the first node deactivates the third functional module and the fourth functional module; or, in a case where the first node receives indication information used to indicate activation of the third functional module, the first node activates the third functional module and the fourth functional module.

In the embodiments of the present disclosure, when only indication information used to indicate activation or deactivation of the third functional module is received, corresponding activation or deactivation operations of the fourth functional module that is associated with the third functional module may be completed according to less indication information, thereby improving information transmission efficiency.

The above mainly introduces the solutions provided by the embodiments of the present disclosure from the perspective of method. A signal transmitting apparatus is also shown below, which is used to perform the signal transmitting method in any one of the above embodiments and possible implementations thereof. It can be understood that, in order to implement the above functions, the signal transmitting apparatus contains corresponding hardware structures and/or software modules for performing various functions. Those skilled persons in the art should easily realize that the embodiments of the present disclosure may be implemented in the form of a hardware or a combination of hardware and computer software in combination with the algorithm steps of respective examples described in the embodiments of the present disclosure. Whether a certain function is executed by hardware or by computer software driving hardware depends on the specific application and design constraint conditions of the technical solution. Professional technicians may use different methods to implement the described functions for each specific application, but such implementation should not be considered beyond the scope of the present disclosure.

The embodiments of the present disclosure may divide the signal transmitting apparatus into functional modules according to the above method embodiments. For example, each functional module may be divided corresponding to each function, or two or more functions may be integrated into a functional module. The above integrated modules are implemented in the form of hardware or in the form of software. It should be noted that the division of the functional modules in the embodiments of the present disclosure is schematic, which is only a logical functional division, and there may be other manners to divide the functional modules in actual implementation. The following is an example of dividing each functional module according to each function.

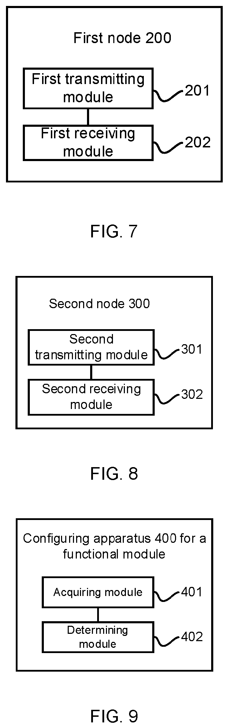

FIG. 7 is a structural diagram of a first node in accordance with some embodiments. As shown in FIG. 7, the first node 200 includes: a first transmitting module 201. In some embodiments, the first node 200 further includes a first receiving module 202.

The first transmitting module 201 is configured to transmit a first signal according to a transmission configuration set; the transmission configuration set includes at least one transmission configuration, and the transmission configuration includes a time domain resource and/or a frequency domain resource.

In some embodiments, the transmission configuration set is determined by one or more of: a first functional module; configuration information of a downlink reference signal/a downlink channel; configuration information of an uplink reference signal/an uplink channel; configuration information of an uplink signal/an uplink channel; configuration information of a downlink signal/a downlink channel; measurement information or detection information of a downlink reference signal/a downlink channel; measurement information or detection information of an uplink reference signal/an uplink channel; measurement information or detection information of an uplink signal/an uplink channel; measurement information or detection information of a downlink signal/a downlink channel.

In some embodiments, the first functional module is determined by the first node based on configuration information of the first functional module transmitted from the second node; or, the first functional module is pre-stored in the first node; or, the first functional module is obtained after the first node is updated based on the second functional module.

In some embodiments, the configuration information of the first functional module includes one or more of the following information: a function of the first functional module, input information of the first functional module, output information of the first functional module, indication information used to indicate whether the first functional module is enabled, identification information of the first functional module, index information of the first functional module, storage location information of the first functional module, version information of the first functional module, hardware configuration information of the first functional module, and software configuration information of the first functional module.

In some embodiments, the first transmitting module 201 is further configured to transmit first request information to the second node in a case where a first condition is satisfied; the first request information is used to request configuration information of the first functional module. The first receiving module 202 is configured to receive the configuration information of the first functional module from the second node.

In some embodiments, the first condition includes one or more of: the first node receiving an instruction for configuring a transmission configuration set; the first node not including the first functional module; a service type of the first node being changed; wireless environment information of the first node being changed;

a channel quality of the first node being changed; or version information of the first functional module included in the first node being lower than version information of the first functional module in the second node.

In some embodiments, the configuration information of the first functional module is determined according to a type of the first node.

In some embodiments, after transmitting the first signal, the first receiving module 202 is further configured to receive update information of the first functional module from the second node, where the update information of the first functional module is used to update the first functional module.

In some embodiments, the first signal includes one or more of: an uplink synchronization signal; an uplink access signal; an uplink random access signal; an uplink channel quality measurement signal; or an uplink reference signal.

FIG. 8 is a structural diagram of a second node in accordance with some embodiments. As shown in FIG. 8, the second node 300 includes: a second transmitting module 301. In some embodiments, the second node 300 further includes a second receiving module 302.

The second transmitting module 301 is configured to transmit configuration information of the first functional module to the first node. The first functional module is configured to determine a transmission configuration set of the first node, the transmission configuration set includes one or more transmission configurations, and the transmission configuration includes a time domain resource and/or a frequency domain resource.

The second transmitting module 301 is configured to transmit the configuration information of the first functional module to the first node in a case where a second condition is satisfied; the second condition includes one or more of: first request information (first request information is used to request the configuration information of the first functional module) from the first node being received; the service type change of the first node being detected; the wireless environment information change of the first node being detected; or the wireless channel quality measurement information change of the first node being detected.

The second receiving module 302 is configured to receive a first signal transmitted from the first node according to the transmission configuration set; the second transmitting module 301 is further configured to transmit update information of the first functional module to the first node based on the first signal.

In some embodiments, the transmission configuration set is determined by one or more of: a first functional module; configuration information of a downlink reference signal/a downlink channel; configuration information of an uplink reference signal/an uplink channel; configuration information of an uplink signal/an uplink channel; configuration information of a downlink signal/a downlink channel; measurement information or detection information of a downlink reference signal/a downlink channel; measurement information or detection information of an uplink reference signal/an uplink channel; measurement information or detection information of an uplink signal/an uplink channel; measurement information or detection information of a downlink signal/a downlink channel.

In some embodiments, the first functional module is determined by the first node based on configuration information of the first functional module transmitted from the second node; or, the first functional module is pre-stored in the first node; or, the first functional module is obtained after the first node is updated based on the second functional module.

In some embodiments, the configuration information of the first functional module includes one or more of the following information: a function of the first functional module, input information of the first functional module, output information of the first functional module, a transmission configuration used to indicate whether the first functional module is enabled, identification information of the first functional module, index information of the first functional module, storage location information of the first functional module, version information of the first functional module, hardware configuration information of the first functional module, and software configuration information of the first functional module.

In some embodiments, the configuration information of the first functional module is determined according to a type of the first node.

In some embodiments, the first signal includes one or more of: an uplink synchronization signal; an uplink access signal; an uplink random access signal; an uplink channel quality measurement signal; or an uplink reference signal.

FIG. 9 is a block diagram of a configuring apparatus for a functional module in accordance with some embodiments. As shown in FIG. 9, configuring apparatus 400 for the functional module includes an acquiring module 401 and a determining module 402.

The acquiring module 401 is configured to acquire a type of the functional module.

The determining module 402 is configured to determine identification information of the functional module according to the type of the functional module.

In some embodiments, in a case where the type of the functional module is the first type, the identification information of the functional module uniquely identifies the functional module in one or more second nodes.

In some embodiments, in a case where the type of the functional module is the second type, the identification information of the functional module uniquely identifies the functional module in one or more second nodes.

In some embodiments, a length of the identification information of the functional module with the first type is different from a length of the identification information of the functional module with the second type.

In some embodiments, the identification information of the functional module with the first type is taken from a first identification information set.

In some embodiments, the identification information of the functional module with the second type is taken from a first identification information set.

In some embodiments, the length of the identification information of the functional module with the second type is related to a number of the functional module with the second type.

In some embodiments, the functional module with the first type is a functional module configured by a second node to a first node; and the functional module with the second type is a functional module generated or updated by the first node.

In some embodiments, the acquiring module 401 is configured to acquire information used to indicate the type of the functional module; and determine the type of the functional module according to the information used to indicate the type of the functional module.

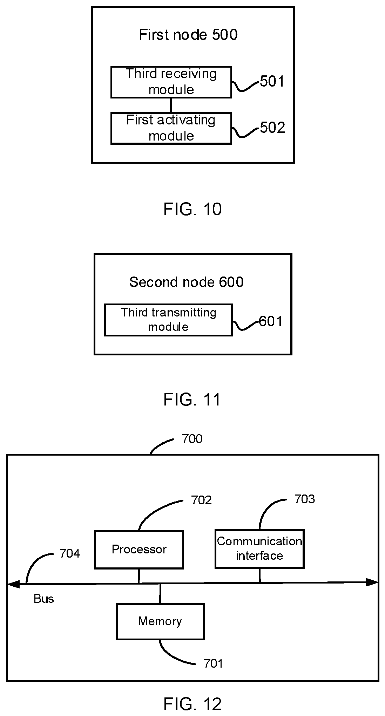

FIG. 10 is a structural diagram of another first node in accordance with some embodiments. As shown in FIG. 10, the first node 500 includes: a third receiving module 501 and a first activating module 502.

The third receiving module 501 is configured to receive indication information used to indicate activation or deactivation of the third functional module and from the second node.

The first activating module 502 is configured to activate or deactivate the third functional module and the fourth functional module based on the indication information, where there is an association relationship between the third functional module and the fourth functional module.

In some embodiments, the third functional module and the fourth functional module belong to a same functional module group. The functional module group is configured by the second node; or, the functional module group is configured by the first node; or the functional module group is configured based on a default rule.

In some embodiments, the association relationship is configured by the second node; or the association relationship is configured by the first node; or the association relationship is configured based on a default rule.

FIG. 11 is a structural diagram of another second node in accordance with some embodiments. As shown in FIG. 11, the second node 600 includes: a third transmitting module 601.

The third transmitting module 601 is configured to transmit indication information used to indicate activation or deactivation of a third functional module to a first node, so that the first node activates or deactivates the third functional module and the fourth functional module, where there is an association relationship between the third functional module and the fourth functional module.

In some embodiments, the third functional module and the fourth functional module belong to a same functional module group. The functional module group is configured by the second node; or, the functional module group is configured by the first node; or the functional module group is configured based on a default rule.

In some embodiments, the association relationship is configured by the second node; or the association relationship is configured by the first node; or the association relationship is configured based on a default rule.

In a case where the functions of the above integrated modules are implemented in the form of hardware, the embodiments of the present disclosure provide a structure of a communication apparatus involved in the above embodiments. As shown in FIG. 12, the communication apparatus 700 includes a communication interface 703, a processor 702, and a bus 704. In some embodiments, the communication apparatus 700 may also include a memory 701.

The processor 702 implements or executes various exemplary logical blocks, modules and circuits described in the embodiments of the present disclosure. The processor 702 may be a central processor, a general-purpose processor, a digital signal processor, an application specific integrated circuit, a field programmable gate array, or any other programmable logic device, a transistor logic device, a hardware component, or any combination thereof. The processor 702 may implement or execute various exemplary logical blocks, modules and circuits described in the embodiments of the present disclosure. The processor 702 may also be a combination that implements computing functions, for example, a combination containing one or more microprocessors, a combination of a DSP and a microprocessor, or etc.

The communication interface 703 is configured to connect to other devices through the communication network. The communication network may be Ethernet, wireless access network, wireless local area network (Wireless Local Area Networks, WLAN) or etc.

The memory 701 may be, a read-only memory (Read-Only Memory, ROM) or a static storage device of any other type that may store static information and instructions, a random access memory (Random Access Memory, RAM), or a dynamic storage device of any other type that may store information and instructions, or an electrically erasable programmable read-only memory (Electrically Erasable Programmable Read-Only Memory, EEPROM), a magnetic disk storage medium or any other magnetic disk storage device, or any other medium that may be used to carry or store desired program codes in the form of instructions or data structures and may be accessed by a computer, but not limited thereto.

As an example, the memory 701 may exist independently of the processor 702, and the memory 701 may be connected to the processor 702 through the bus 704, and the processor 702 is used for storing instructions or program codes. When revoking and executing the instructions or program codes stored in the memory 701, the processor 702 may implement the signal transmitting method or the configuring method for a functional module provided by the embodiments of the present disclosure.

As another example, the memory 701 may be integrated with the processor 702.

The bus 704 may be an extended industry standard architecture (Extended Industry Standard Architecture, EISA) bus or etc. The bus 704 may be divided into an address bus, a data bus, a control bus and so on. For ease of representation, only one bold line is used in FIG. 12, but it does not mean that there is only one bus or one type of bus.

Some embodiments of the present disclosure provide a computer readable storage medium (for example, a non-transitory computer readable storage medium), the computer readable storage medium has stored computer program instructions, and the computer program instructions, when executed by a computer, enable the computer to perform the signal transmitting method or the configuring method for a functional module in any one of the above embodiments.

In some embodiments, the computer may be the above first node or the second node, and the present disclosure does not limit the form of the computer.

In some embodiments, the above computer readable storage medium may include, but is not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card or a flash memory device (e.g., an erasable programmable read-only memory (Erasable Programmable Read-Only Memory, EPROM), a card, a stick or a key drive, etc.). The various computer readable storage media described in the present disclosure may represent one or more devices for storing information and/or other machine readable storage media for storing information. The term "machine readable storage medium" may include, but is not limited to, a wireless channel and various other media capable of storing, containing, and/or carrying instruction(s) and/or data.

The embodiments of the present disclosure provide a computer program product containing instructions that, when run on a computer, enables the computer to perform the signal transmitting method or the configuring method for a functional module in any one of the above embodiments.

The foregoing descriptions are merely specific implementations of the present disclosure, but the protection scope of the present disclosure is not limited thereto, any changes or replacements within the technical scope of the present disclosure shall be included in the protection scope of the present disclosure. Therefore, the protection scope of the present disclosure shall be determined by the protection scope of the claims.

**Claims**

1. A signal transmitting method, applied to a first node, **characterized in that** the method comprises:

transmitting a first signal according to a transmission configuration set; wherein the transmission configuration set comprises one or more transmission configurations, and the transmission configuration comprises a time domain resource and/or a frequency domain resource.

2. The method according to claim 1, wherein the transmission configuration set is determined by one or more of:

a first functional module;
configuration information of a downlink reference signal or a downlink channel;
configuration information of an uplink reference signal or an uplink channel;
configuration information of an uplink signal or an uplink channel;
configuration information of a downlink signal or a downlink channel;
measurement information or detection information of a downlink reference signal or a downlink channel;
measurement information or detection information of an uplink reference signal or an uplink channel;
measurement information or detection information of an uplink signal or an uplink channel; or
measurement information or detection information of a downlink signal or a downlink channel.

3. The method according to claim 2, wherein

the first functional module is determined by the first node based on configuration information of the first functional module transmitted from a second node; or
the first functional module is pre-stored in the first node; or
the first functional module is obtained by updating by the first node based on the second functional module.

4. The method according to claim 3, wherein the configuration information of the first functional module comprises one or more of following information:
a function of the first functional module, input information of the first functional module, output information of the first functional module, indication information used to indicate whether the first functional module is enabled, identification information of the first functional module, index information of the first functional module, storage location information of the first functional module, version information of the first functional module, hardware configuration information of the first functional module, and software configuration information of the first functional module.

5. The method according to claim 3, further comprising:

in a case where a first condition is satisfied, transmitting first request information to the second node; wherein the first request information is used to request the configuration information of the first functional module; and
receiving the configuration information of the first functional module from the second node.

6. The method according to claim 5, wherein the first condition comprises one or more of:

the first node receiving an instruction for configuring a transmission configuration set;
the first node not comprising the first functional module;
a service type of the first node being changed;
wireless environment information of the first node being changed;
a channel quality of the first node being changed; or
version information of a first functional module comprised in the first node being lower than version information of a first functional module in the second node.

7. The method according to claim 3, wherein the configuration information of the first functional module is determined according to a type of the first node.

8. The method according to claim 2, wherein after transmitting the first signal, the method further comprises:
receiving update information of the first functional module from a second node, wherein the update information of the first functional module is used to update the first functional module.

9. The method according to any one of claims 1 to 8, wherein the first signal comprises one or more of:

an uplink synchronization signal;
an uplink access signal;
an uplink random access signal;
an uplink channel quality measurement signal; or
an uplink reference signal.

10. A signal transmitting method, applied to a second node, **characterized in that** the method comprises:

transmitting configuration information of a first functional module to a first node;
wherein the first functional module is configured to determine a transmission configuration set of the first node, the transmission configuration set comprises at least one transmission configuration, and the transmission configuration comprises a time domain resource and/or a frequency domain resource.

11. The method according to claim 10, wherein the transmitting the configuration information of the first functional module to the first node comprises: in a case where a second condition is satisfied, transmitting the configuration information of the first functional module to the first node;
the second condition comprises one or more of:

first request information from the first node being received; wherein the first request information is used to request the configuration information of the first functional module;
detecting that a service type of the first node has changed;
detecting that wireless environment information of the first node has changed; or
detecting that wireless channel quality measurement information of the first node has changed.

12. The method according to claim 10, further comprising:

receiving a first signal transmitted from the first node according to the transmission configuration set; and
transmitting update information of a first functional module to the first node based on the first signal.

13. The method according to claim 10, wherein the transmission configuration set is determined by one or more of:

a first functional module;
configuration information of a downlink reference signal or a downlink channel;
information of an uplink reference signal or an uplink channel;
configuration information of an uplink signal or an uplink channel;
configuration information of a downlink signal or a downlink channel;
measurement information or detection information of a downlink reference signal or a downlink channel;
measurement information or detection information of an uplink reference signal or an uplink channel;
measurement information or detection information of an uplink signal or an uplink channel; or
measurement information or detection information of a downlink signal or a downlink channel.

14. The method according to claim 10, wherein

the first functional module is determined by the first node based on configuration information of a first functional module transmitted from a second node; or
the first functional module is pre-stored in the first node; or
the first functional module is obtained by updating by the first node based on the second functional module.

15. The method according to claim 10, wherein the configuration information of the first functional module comprises one or more of following information: a function of the first functional module, input information of the first functional module, output information of the first functional module, indication information used to indicate whether the first functional module is enabled, identification information of the first functional module, index information of the first functional module, storage location information of the first functional module, version information of the first functional module, hardware configuration information of the first functional module, and software configuration information of the first functional module.

16. The method according to claim 10, wherein the configuration information of the first functional module is determined according to a type of the first node.

17. The method according to any one of claims 10 to 16, wherein the first signal comprises one or more of:

an uplink synchronization signal;
an uplink access signal;
an uplink random access signal;
an uplink channel quality measurement signal; or
an uplink reference signal.

18. A configuring method for a functional module, **characterized by** comprising:

acquiring a type of the functional module;
determining identification information of the functional module according to the type of the functional module.

19. The method according to claim 18, wherein the type of the functional module comprises at least a first type and a second type.

20. The method according to claim 19, wherein

in a case where the type of the functional module is the first type, the identification information of the functional module uniquely identifies the functional module in at least one second node; in a case where the type of the functional module is the second type, the identification information of the functional module uniquely identifies the functional module in at least one second node.

21. The method according to claim 19, wherein a length of the identification information of the functional module with the first type is different from a length of the identification information of the functional module with the second type.

22. The method according to claim 19, wherein the identification information of the functional module with the first type is taken from a first identification information set.

23. The method according to claim 22, wherein the identification information of the functional module with the second type is taken from the first identification information set.

24. The method according to claim 19, wherein the length of the identification information of the functional module with the second type is related to a number of the functional module with the second type.

25. The method according to any one of claims 19 to 24, wherein the functional module with the first type is a functional module configured by a second node to a first node; and the functional module with the second type is a functional module generated or updated by the first node.

26. The method according to claim 18, wherein the acquiring the type of functional module comprises: acquiring information used to indicate the type of the functional module; and determining the type of functional module according to the information used to indicate the type of functional module.

27. A configuring method for a functional module, applied to a first node, **characterized in that** the method comprises:

receiving indication information from a second node and used to indicate activation or deactivation of a third functional module; activating or deactivating the third functional module and a fourth functional module based on the indication information, wherein there is an association relationship between the third functional module and the fourth functional module.

28. The method according to claim 27, wherein the third functional module and the fourth functional module belong to a same functional module group; wherein the functional module group is configured by the second node; or, the functional module group is configured by the first node; or, the functional module group is configured based on a default rule.

29. The method according to claim 27, wherein

the association relationship is configured by the second node; or
the association relationship is configured by the first node; or
the association relationship is configured based on a default rule.

30. A configuring method for a functional module, applied to a second node, **characterized in that** the method comprises:
transmitting indication information used to indicate activation or deactivation of a third functional module to a first node, so that the first node activates or deactivates the third functional module and a fourth functional module, wherein there is an association relationship between the third functional module and the fourth functional module.

31. The method according to claim 30, wherein the third functional module and the fourth functional module belong to a same functional module group; wherein the functional module group is configured by the second node; or the functional module group is configured by the first node; or the functional module group is configured based on a default rule.

32. The method according to claim 30, wherein

the association relationship is configured by the second node; or
the association relationship is configured by the first node; or
the association relationship is configured based on a default rule.

33. A communication apparatus, **characterized by** comprising: a memory and a processor; the memory and the processor are coupled; the memory is configured to store instructions executable by the processor; when the processor executes the instructions, the communication apparatus performs the method according to any one of claims 1 to 32.

34. A computer readable storage medium, **characterized in that** the computer readable storage medium has stored computer program instructions thereon, where the computer program instructions are executed on a computer, so as to enable the computer to perform the method according to any one of claims 1 to 32.

**100**

1021

1022

First node 101

Second node 102

FIG. 1

First node

Second node

S101, Send a first signal
according to a transmission
configuration set

FIG. 2

First node

Second node

S201, first request information

S202, configuration information of a
first functional module

FIG. 3

First node    Second node

S101, transmit a first signal according
to a transmission configuration set

S301, update information of a first
functional module

FIG. 4

Acquire a type of a functional module — S401

Determine identification information of the
functional module according to the type of the
functional module — S402

FIG. 5

Second node    First node

S501, indication information used to
indicate activation or deactivation of a
third functional module

S502, activate or deactivate, by the first node,
a third functional module and a fourth
functional module based on the indication
information, where there is an association
relationship between the third functional
module and the fourth functional module

FIG. 6

First node 200

First transmitting module — 201

First receiving module — 202

FIG. 7

Second node 300

Second transmitting module — 301

Second receiving module — 302

FIG. 8

Configuring apparatus 400 for a functional module

Acquiring module — 401

Determining module — 402

FIG. 9

First node 500

Third receiving module ~501

First activating module ~502

FIG. 10

Second node 600

Third transmitting module ~601

FIG. 11

700

702

703

704

Processor

Communication interface

Bus

Memory

701

FIG. 12

## INTERNATIONAL SEARCH REPORT

| International application No. |
|---|
| **PCT/CN2023/113079** |

| A. | CLASSIFICATION OF SUBJECT MATTER |
|---|---|

H04W 72/0446(2023.01)i

According to International Patent Classification (IPC) or to both national classification and IPC

| B. | FIELDS SEARCHED |
|---|---|

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT, CNKI, DWPI, ENTXT, 3GPP: 资源, 配置, 集合, 传输, 发送, 信号, 时域, 频域, 上行, 下行, 参考, 信道, 检测, 测量, 更新, resource, configuration, set, transmi+, signal, Time Domain, Frequency Domain, uplink, downlink, reference, channel, detection, measurement, update

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115053555 A (HUAWEI TECHNOLOGIES CO., LTD.) 13 September 2022 (2022-09-13) description, paragraphs [0023]-[0177], and figures 1-4 | 1-17, 33, 34 |
| A | CN 110831135 A (HUAWEI TECHNOLOGIES CO., LTD.) 21 February 2020 (2020-02-21) entire document | 1-17, 33, 34 |
| A | CN 108989008 A (HUAWEI TECHNOLOGIES CO., LTD.) 11 December 2018 (2018-12-11) entire document | 1-17, 33, 34 |
| A | HUAWEI et al. "Resource Configuration on UL Transmission without Grant" *3GPP TSG RAN WG1 Ad hoc Meeting R1-1709991*, 30 June 2021 (2021-06-30), entire document | 1-17, 33, 34 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 October 2023** | **24 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/113079** |

| **Box No. III** | **Observations where unity of invention is lacking (Continuation of item 3 of first sheet)** |
| --- | --- |

This International Searching Authority found multiple inventions in this international application, as follows:

Invention I: Claims 1, 10, 33 (in part) and 34 (in part).

Invention II: Claims 18, 33 (in part) and 34 (in part).

Invention III: Claims 27, 30, 33 (in part) and 34 (in part).

The same or corresponding technical feature of "configuration" between claims (1, 10, 33 (in part), 34 (in part)) and claims (18, 33 (in part), 34 (in part)) is common general knowledge in the art; therefore, invention I and invention II do not have a same or corresponding special technical feature. Therefore, invention I and invention II do not fall within a single general inventive concept, and do not comply with the requirement of unity of invention (PCT Rule 13.1).

The same or corresponding technical feature of "configuration" between claims (1, 10, 33 (in part), 34 (in part)) and claims (27, 30, 33 (in part), 34 (in part)) is common general knowledge in the art; therefore, invention I and invention III do not have a same or corresponding special technical feature. Therefore, invention I and invention III do not fall within a single general inventive concept, and do not comply with the requirement of unity of invention (PCT Rule 13.1).

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-17, 33 (in part), 34 (in part)**

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/113079**

| Patent document cited in search report | | | Publication date (day/month/year) | Patent family member(s) | | | Publication date (day/month/year) |
|---|---|---|---|---|---|---|---|
| CN | 115053555 | A | 13 September 2022 | WO | 2021159493 | A1 | 19 August 2021 |
| | | | | EP | 4090063 | A1 | 16 November 2022 |
| | | | | US | 2023045308 | A1 | 09 February 2023 |
| CN | 110831135 | A | 21 February 2020 | EP | 3826373 | A1 | 26 May 2021 |
| | | | | US | 2023029758 | A1 | 02 February 2023 |
| | | | | WO | 2020030144 | A1 | 13 February 2020 |
| | | | | US | 2021168728 | A1 | 03 June 2021 |
| | | | | IN | 202137006693 | A | 12 March 2021 |
| | | | | CN | 115396997 | A | 25 November 2022 |
| CN | 108989008 | A | 11 December 2018 | WO | 2018223891 | A1 | 13 December 2018 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211559629